# EUROPÄISCHE PATENTSCHRIFT

(11) **EP 0 535 666 B1**
(45) Veröffentlichungstag und Bekanntmachung des Hinweises auf die Patenterteilung: **22.03.1995**
(21) Anmeldenummer: 92116791.2
(22) Anmeldetag: 01.10.1992
(51) Int. Cl.: A01D 82/00

(54) **Vorrichtung zur Halmgutaufbereitung**
Device for crop-conditioning
Dispositif pour la conditionnement de fourrage

(30) Priorität: 02.10.1991 DE 4132759
(43) Veröffentlichungstag der Anmeldung: 07.04.1993
(73) Patentinhaber: SAME S.p.A., I-24047 Treviglio (Bergamo) (IT)
(72) Erfinder: von Allwörden, Wilhelm, Dipl.-Ing., W-7908 Oberstotzingen (DE); Häfele, Martin, Dipl.-Ing., W-7099 Adelmannsfelden (DE)
(74) Vertreter: Nau, Walter, Dipl.-Ing.

(56) Entgegenhaltungen:
- DE-A- 1 962 777
- DE-A- 3 939 659
- FR-A- 590 562
- FR-A- 1 457 925
- FR-A- 1 537 316
- FR-A- 2 293 868
- NL-A- 7 703 304
- US-A- 2 909 988
- US-A- 2 953 885
- US-A- 3 146 568
- US-A- 3 732 670
- LANDBOUW MECHANISATIE Bd. 40, Nr. 2, Februar 1989, WAGENINGEN NL Seiten 21 - 23BOSMA & KOEGEL
- LANDTECHNIK Bd. 44, 1989, LEHRTE, HANNOVER DE Seiten 381 - 382 SCHURIG 'NEUEREM GLICHKEITEN DER M[HGUTAUFBEREITUNG'

## Beschreibung

Die Erfindung bezieht sich auf eine aus DE-A-3 939 659 bereits bekannte Vorrichtung, mit der geschnittenes Halmgut aufbereitet werden kann gemäß dem Oberbegriff des Anspruchs 1.

Aus der DE-A-19 62 777 ist darüberhinaus der Aufbau einer Erntemaschine entnehmbar, die eine Einrichtung zum Mähen des Halmgutes umfaßt, dem eine Aufnahmetrommel nachgeschaltet ist, die das geschnittene Halmgut einer Transportvorrichtung zuleitet, von der es in eine Halmgut-Aufbereitungsvorrichtung gelangt. Diese Vorrichtung wird gebildet durch eine Trommel, welche auf dem Außenumfang eine gleichmäßig verteilte Verzahnung aufweist. Nahezu der halbe Umfang der Trommel ist umgeben von einer sogenannten Wanne. Die Aufbereitung des Halmguts erfolgt, indem dieses in den Spalt zwischen der Trommel und der Wanne geführt wird, wobei die Trommel mit hoher Drehzahl rotierend das Halmgut erfaßt, aufbereitet, d. h. zerfasert und anschließend einer nachgeschalteten Preßvorrichtung zuführt.

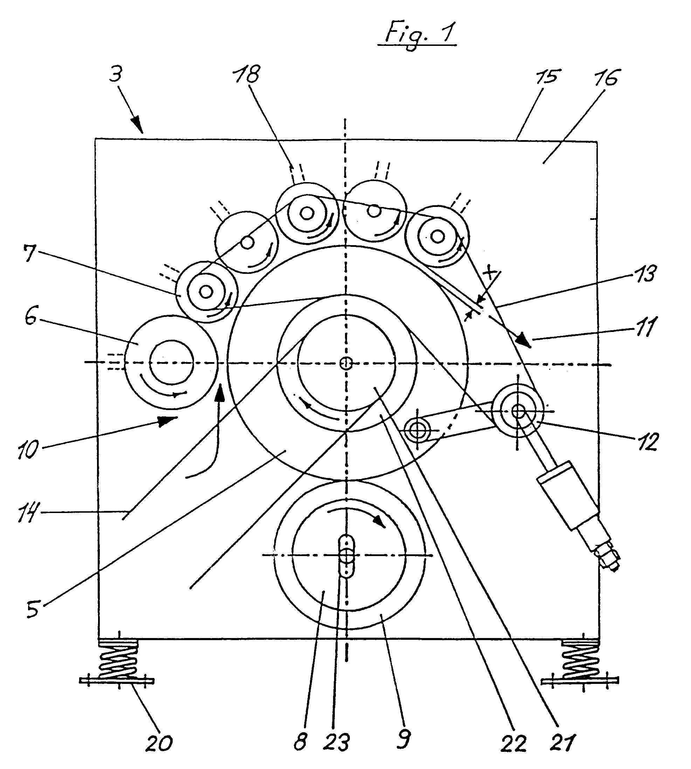

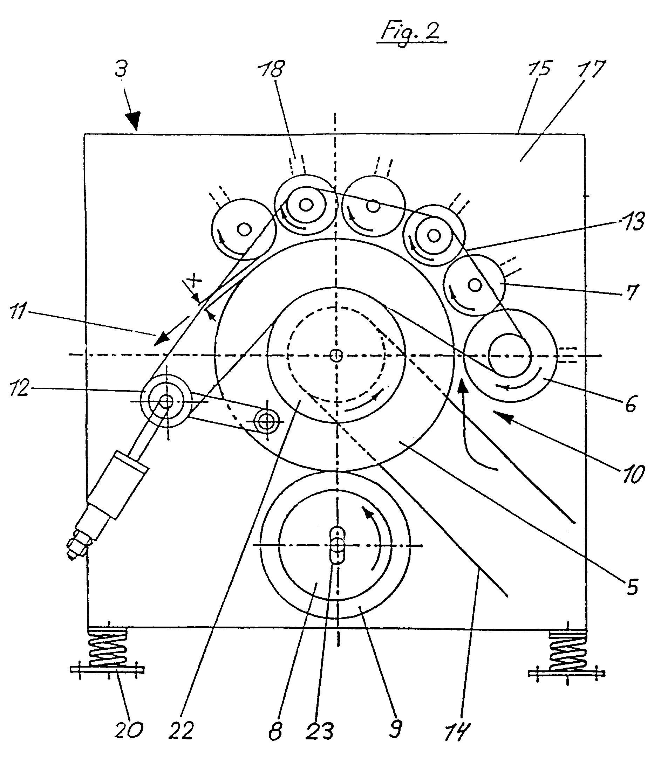

In dem ASAE-Paper No. 901054 ist auf Seite 10, Fig.1 der schematische Aufbau einer Grasmattenmaschine entnehmbar, die unter anderem eine Vorrichtung zur Halmgutaufbereitung aufweist, s. Seite 10, Fig.2, welche im wesentlichen durch eine Walze gebildet wird, der im eingebauten Zustand mehrere einen kleineren Durchmesser aufweisende planetenartig angeordnete Walzen nahezu halbkreisförmig zugeordnet sind. Zur Aufbereitung gelangt das Halmgutes in den Bereich zwischen der Zentral- und den Planetenwalzen, die zueinander gegensinnig angetrieben sind und folglich das eintretende Halmgut weiterfördern, wobei das Halmgut aufbereitet wird.

Die der Erfindung zugrunde liegende Aufgabe besteht darin, den Aufbereitungsgrad der gattungsgemäßen Vorrichtung Zu verbessern, einen wirksamen Schutz vor Fremdkörper zu erreichen, sowie eine Vorrichtung darzustellen, die montagefreundlich, vormontierbar einsetzbar ist.

Diese Aufgabe wird mit den im Anspruch 1 genannten Merkmalen gelöst. Der Vorrichtungsaufbau sieht eine Zentralwalze vor, der im eingebauten Zustand im oberen Bereich Planetenwalzen zugeordnet sind und die unterhalb mit einer Bürstenwalze in Verbindung steht. Allen Walzen gemeinsam ist die achsparallele Anordnung und Lagerung in jeweils endseitig der Walzen befindlichen Seitenwänden. Die Seitenwände sind in einem Rahmen eingebracht und bilden gemeinsam ein Aggregat, das vormontiert beispielsweise in eine Grasmattenmaschine einsetzbar ist. Dieser Aufbau begünstigt vorteilhaft die Wartung wie auch die Zugänglichkeit einzelner Bauteile im Falle einer erforderlichen Reparatur und erhöht damit die Verfügbarkeit der gesamten Maschine.

Erfindungsgemäß sind zur Verbesserung des Halmgut-Aufbereitungsgrades die Oberflächen der Zentralwalze und der Planetenwalzen strukturiert, damit möglichst jeder Halm des in die Vorrichtung eintretenden Halmgutes aufbereitet, d. h. zerfasert wird.

Aufgrund des Aufbaus und der Einbaulage der Vorrichtung wird das geschnittene und zur Aufbereitung vorgesehene Halmgut in den Teilringspalt dem Abstandsmaß zwischen den Planetenwalzen und der Zentralwalze geleitet, der sich im Bereich des oberen Umfangs der Zentralwalze befindet. Zur gezielten Einleitung des Halmguts in den Eintritt des Teilringspaltes dient die in der Einbaulage unterhalb der Zentralwalze angebaute Bürstenwalze, deren weitere Aufgabe darin besteht, Fremdkörper, wie zum Beispiel Steine, Metallteile oder andere Gegenstände, vom Halmgut abzusondern zur Vermeidung einer Beschädigung der Vorrichtung. Aufgrund der gradlinigen Förderung des Halmguts durch Zuführorgane zur Vorrichtung erfolgt eine nahezu rechtwinklige Umlenkung des Halmgutes vor Eintritt in die Halmgut-Aufbereitung. Dadurch gelangen die ebenfalls mit dem Halmgut vom Elevator mitgeförderten Fremdkörper aufgrund ihres höheren spezifischen Gewichts im Vergleich zum Halmgut nach Ende des Elevators in die Zone unterhalb der Zentralwalze und können diesen Bereich nahezu ungehindert passieren, da hierzu die Bürsten der unterhalb der Zentralwalze angeordneten Bürstenwalze das Passieren dieser Gegenstände zulassen.

Zum Antrieb der erfindungsgemäßen Vorrichtung dient beispielsweise ein Riemenantrieb, mit dem die Zentralwalze angetrieben wird, von der aus über zwei weitere, endseitig der Zentralwalze angeordnete Kettentriebe die Planetenwalzen angetrieben werden. Anstelle eines Kettentriebs bietet sich ebenso die Verwendung eines Riementriebs, insbesondere Zahnriementriebs an. Alternativ kann weiter ein Zahnradtrieb Anwendung finden wie auch ein hydraulischer Antrieb.

Zur Darstellung eines großen Umschlingungswinkels der einzelnen Kettenräder, beziehungsweise Riemenscheiben an den Planetenwalzen für die Antriebskette beziehungsweise den Antriebsriemen dient ein wechselseitiger, gesplitteter Antrieb der Planetenwalzen, d. h. der Antrieb benachbarter Planetenwalzen erfolgt abwechselnd vom Ende der einen Seite der Zentralwalze oder der anderen Seite der Zentralwalze.

Zur besseren Einleitung des Halmgutes in den Teilringspalt der Vorrichtung ist am Eintritt der Aufbereitung eine Planetenwalze vorgesehen, deren Durchmesser größer ist als der Durchmesser aller übrigen untereinander gleich dimensionierten Planetenwalzen. Zur Darstellung einer gleichen Umfangsgeschwindigkeit aller Planetenwalzen ist die einen größeren Durchmesser aufweisende Planetenwalze mit einem größeren Antriebsrad versehen.

In einer Ausgestaltung der Erfindung kann es vorteilhaft sein, die Umfangsgeschwindigkeit der einzelnen Planetenwalzen beginnend vom Eintritt zum Austritt stetig größer werdend auszulegen, zum Beispiel durch Austausch entsprechender Antriebsräder, um den Aufbereitungsgrad zu verbessern.

Der zunehmenden Dichte des Halmgutes Rechnung tragend ist das Abstandsmaß im Teilringspalt zwischen der Zentralwalze und den Planetenwalzen zwischen dem Eintritt und dem Austritt zunehmend veränderlich einstellbar, d. h. das Abstandsmaß ist zum Austritt hin vorteilhaft kleiner werdend eingestellt.

In einer vorteilhaften Ausgestaltung der Erfindung ist eine zentrale Verstellung des Abstandsmaßes vorgesehen, wodurch alle planetenwalzen gleichzeitig verstellbar sind. Zur Bedienungsvereinfachung kann weiter eine servounterstützte Fernverstellung vorgesehen werden. Weiter bietet es sich an, die Fernverstellung mit einer Anzeigevorrichtung zu versehen, durch die für die Bedienungsperson jederzeit das momentane Abstandsmaß ersichtlich ist.

Als eine weitere Maßnahme zur wirksamen Beeinflussung des Aufbereitungsgrades durch die erfindungsgemäße Vorrichtung ist eine Abstandsmaßverstellung in Abhängigkeit vom Durchsatz des Halmgutes vorgesehen. Mittels geeigneter Überwachungsorgane beziehungsweise Sensoren wird dabei der momentane Halmgut-Durchsatz erfaßt und in Abhängigkeit davon erfolgt mittels Stellorganen eine Verstellung des Abstandsmaßes.

Der konstruktive Aufbau der erfindungsgemäßen Vorrichtung sieht ebenfalls eine federnde Lagerung aller Planetenwalzen vor, bei einer Beibehaltung des vorgegebenen Abstandsmaßes. Diese Lagerung, mit der die Planetenwalzen radial ausweichen können, dient zusätzlich zum Schutz der Vorrichtung, falls in diese ein Fremdkörper gelangt, wie auch zur Vermeidung einer Verstopfung beziehungsweise Blockierung der erfindungsgemäßen Vorrichtung bei einer momentanen stärkeren Halmgut-Beaufschlagung. Vorteilhaft bietet es sich an, die Lagerung mit einer variablen Federvorspannung zu versehen zur Einflußnahme auf die Häufigkeit der Auslenkung einzelner Planetenwalzen. Zur Darstellung einer federnden Lagerung aller Planetenwalzen dient ein längenveränderlicher Antrieb der Planetenwalzen, z. B. der mit einer Spannrolle versehen ist.

Als Ergebnis von Versuchen hat sich ein Abstandsmaß zwischen der Zentralwalze und den Planetenwalzen im Eintrittsbereich zwischen 1 und 20 mm und im Bereich des Austritts zwischen 0 und 5,0 mm als vorteilhaft erwiesen. Das Abstandsmaß verändert sich dabei zwischen Eintritt und Austritt stetig.

Versuche ergaben weiter, daß für den Aufbereitungsgrad das Verhältnis der Umfangsgeschwindigkeiten zwischen der Zentralwalze und den Planetenwalzen von großer Bedeutung ist. Vorteilhaft hat sich dabei ein Verhältnis von 1,1 : 1 bis 2 : 1 erwiesen.

Als optimale Umfangsgeschwindigkeit für die Zentralwalze wie auch für die Bürstenwalze ist ein Bereich von 5 bis 35 m/sec. anzusehen.

Die Aufbereitung des Halmguts, d. h. das Aufspleißen einzelner Halme kann vorteilhaft weiter gesteigert werden, indem die Zentralwalze und alle Planetenwalzen mit einer Riffelung versehen werden. Außerdem bewirkt die Riffelung eine Selbstreinigung der Walzen. Dazu ist sowohl eine achsparallele Längsriffelung als auch eine Riffelung, die einen schraubenlinienartigen Verlauf (Drall) aufweist, verwendbar. Als Drall für eine schraubenlinig verlaufende Riffelung hat sich ein Wert von von 0,1 bis 20% als günstig erwiesen. Als Teilungsmaß für beide Riffelungen konnte ein Bereich von 0,5 bis 10 mm als vorteilhaft bestimmt werden. Eine zufriedenstellende Gutaufbereitung ist durch Riffelungen erzielbar, welche einen Profilwinkel zwischen 35 bis 90° aufweisen.

Zur Verschleißminderung der Riffelung dient eine Abflachung des Außenbereichs der Riffelung, wobei für die Abflachung ein Maß zwischen 0,1 und 2 mm vorgesehen ist.

Der konstruktive Aufbau der erfindungsgemäßen Vorrichtung sieht strahlenförmig auf den Mittelpunkt der Zentralwalze gerichtete Aussparungen vor, in denen die einzelnen Planetenwalzen geführt und deren Lagerung eingebracht sind.

In Ausgestaltung der Erfindung ist zur wirksamen Umlenkung des Halmgutes in den Eintritt der Aufbereitungs-Vorrichtung die Bürstenwalze im gleichen Drehsinn mit der Zentralwalze angetrieben. Die Bürstenwalze ist auf dem Außenumfang mit elastischen Bürsten versehen, durch die eine schonende Umlenkung des Halmgutes möglich ist und die außerdem im Falle einer Mitnahme von aufbereitetem Halmgut durch die Zentralwalze dieses vorteilhaft von der Zentralwalze abnimmt. Weiter wird durch die Bürstenwalze eine Abscheidung von Fremdkörpern aus dem Halmgut erreicht, die bei einer Umlenkung des Halmgutes nach Verlassen des Zuförderers beziehungsweise Elevators aufgrund des höheren spezifischen Gewichts im Vergleich zum Halmgut von diesem nicht mitgenommen, sondern bogenförmig unterhalb der Zentralwalze wurfartig weitergefördert wird und dabei die Bürstenzone der Bürstenwalze nahezu ungehindert passieren können. Die Anordnung der Bürstenwalze ist weiter lageveränderlich angeordnet, insbesondere vertikal einstellbar, um die Wirksamkeit der Bürstenwalze auch bei einem Verschleiß der elastischen Bürste, d. h. reduziertem Außendurchmesser zu gewährleisten, durch Verschiebung der Bürstenwalze zur Zentralwalze.

In einer weiteren Ausgestaltung der erfinderischen-Vorrichtung ist eine elastische Lagerung für das gesamte Aggregat vorgesehen. Damit wird zum einen die nachteilige Übertragung von Schwingungen, die von dem Aggregat ausgelöst werden, auf den Fahrerstand der Maschine vermieden und zum anderen kommt es nicht zu einer nachteiligen Übertragung von Rahmen-Verwindungen des Fahrzeugs, insbesondere Grasmattenmaschine, auf das Aggregat für die Halmgutaufbereitung.

Die Zugänglichkeit für die Wartung und Reparatur der Vorrichtung zur Halmgutaufbereitung wird entscheidend verbessert durch die Ausbildung als Einheit in Form eines Aggregates, das alle Bauteile der Halmgutaufbereitung umfaßt. Diesen Gedanken aufgreifend ist weiter daran gedacht, das Aggregat als Einheit in eine Häckselmaschine oder in eine Grasmattenmaschine einsetzbar auszubilden, wobei dieses elastisch gelagert wird.

Für die Auslegung der erfindungsgemäßen Vorrichtung hat sich vorteilhaft eine Anzahl von Planetenwalzen zwischen 1 bis 10 ergeben. Als Durchmesser für die Planetenwalze hat sich ein Bereich zwischen 50 bis 400 mm und für die Zentralwalze von 200 bis 900 mm als günstig erwiesen.

Als Auslegungskritierien für die Zentralwalze und die Planetenwalzen sind verschiedene Parameter zu berücksichtigen. Abhängig von dem zu bearbeitenden Halmgut und dem Grad der Aufbereitung ist erfindungsgemäß die Anzahl der Planetenwalzen, sowie der Durchmesser und auch die Umfangsgeschwindigkeit aller Walzen in vorgegebenen Bereichen wählbar.

Ein Ausführungsbeispiel, das zur weiteren Erläuterung der Erfindung beiträgt, ist aus den Zeichnungen sowie der anschließenden Figurenbeschreibung entnehmbar.
Es zeigt:
- Fig.1:: in einer Seitenansicht den schematischen Aufbau der erfindungsgemäßen Vorrichtung zur Halmgutaufbereitung,
- Fig.2:: die gegenüberliegende Seite der in Fig.1 dargestellten Vorrichtung,
- Fig.3:: die erfindungsgemäße Vorrichtung gemäß Fig.1, die versehen ist mit einer Zentralverstellung aller Planetenwalzen,
- Fig.4:: ein alternativer Lösungsvorschlag zur Zentralverstellung wie in Fig.3 dargestellt,
- Fig.5:: die Anordnung einer Kurvenscheibe mit der eine Verstellung der Planetenwalzen erfolgt.

Durch die Figuren wird der prinzipielle Aufbau der Vorrichtung weiter verdeutlicht. Alle zur Vorrichtung gehörigen Bauteile sind kompaktbauend zu einer Einheit zusammengefügt und bilden gemeinsam das Aggregat 3. Das beispielsweise in eine Grasmattenmaschine einsetzbare Aggregat 3 ist versehen mit einer mittig angeordneten Zentralwalze 5, der in der Einbaulage im oberen Bereich des Außenumfangs mehrere bis nahe an die Zentralwalze 5 reichende Planetenwalzen zugeordnet sind. Im Bereich des Eintritts 10 befindet sich die Planetenwalze 6, die im Vergleich zu allen übrigen Planetenwalzen 7 einen größeren Durchmesser aufweist, wodurch eine bessere Umlenkung und Einleitung des Halmguts in die Vorrichtung gewährleistet ist. Das Abstandsmaß X zwischen den Planetenwalzen 6, 7 und der Zentralwalze 5 ist vom Eintritt 10 beginnend kontinuierlich bis zum Austritt 11 abnehmend eingestellt. Zur Verwendung dieser erfindungsgemäßen Vorrichtung für verschiedene Halmfrüchte, wie auch zur Anpassung an den Durchsatz ist das Abstandsmaß X einstellbar. Zur Verbesserung der Handhabung ist eine Zentralverstellung einsetzbar. Jede Planetenwalze 6, 7 ist in einer Aussparung 18 gelagert und geführt, wobei die Lagerung so ausgelegt ist, daß bei Eintreten eines Fremdkörpers in das Aggregat 3 jede Planetenwalze radial ausweichen kann zur Vermeidung einer Beschädigung und damit Ausfall der Vorrichtung. Dazu bietet es sich an, die einzelnen Planetenwalzen 6, 7 einstellbar, federnd anzuordnen. Als Antrieb des Aggregats 3 ist ein Zentralantrieb vorgesehen, der über den Riemen 14 erfolgt, der eine Verbindung zwischen einer nicht dargestellten Antriebsquelle der Grasmattenmaschine beziehungsweise jeder anderen Maschine in der das erfindungsgemäße Aggregat 3 eingesetzt ist und der an der Zentralwalze 5 befindlichen Riemenscheibe 21 herstellt. Über ein parallel zur Riemenscheibe 21 an der Zentralwalze 5 befestigtes Zahnrad 22 erfolgt über einen Kettentrieb, der unter anderem die Antriebskette 13 umfaßt ein Antrieb von je drei der insgesamt sechs Planetenwalzen von jeder Stirnseite der Zentralwalze 5. Mit der Aufteilung des Antriebs der Planetenwalzen wird eine Vergrößerung der Umschlingungswinkel der einzelnen Antriebsräder der Planetenwalzen durch die Antriebskette 13 erreicht. Dadurch weisen benachbarte Planetenwalzen einen wechselseitigen Antrieb auf. Mit dem Kettentrieb ist weiter die federnd belastete Spannrolle 12 verbunden mit der die Antriebskette 13 vorgespannt wird und die weiter aufgrund der Lage der Spannrolle 12 den Umschlingungswinkel der Antriebskette 13 auf dem Zahnrad 22 vorteilhaft vergrößert. Die beiden endseitig der Zentralwalze vorgesehenen Kettentriebe sind so ausgeführt, daß die Drehrichtung zwischen den Planetenwalzen 6, 7 und der Zentralwalze 5 gegensinnig erfolgt. Anstelle des beschriebenen Riemen- und Kettentriebs ist die Vorrichtung auch mit einem Zahnradtrieb wie auch mit einem hydraulischen Antrieb antreibbar. Unterhalb der Zentralwalze 5 befindet sich die Bürstenwalze 8, die mit Bürsten 9 versehen ist. Die übereinstimmend mit dem Drehsinn der Zentralwalze 5 angetriebene Bürstenwalze 8 dient zur Umlenkung des Halmgutes in den Eintritt 10 der Vorrichtung. Die Bürsten 9 der Bürstenwalze 8 übernehmen darüber hinaus die Aufgabe einer Steinsicherung. Das dem Aggregat zur Aufbereitung zugeführte Halmgut wird der Vorrichtung über nicht dargestellte Zuführorgane zugleitet, deren Förderrichtung weitestgehend übereinstimmt mit der in Fig.1 dargestellten Lageposition des Antriebsriemens 14. Im Bereich des Eintritts 10 erfährt das Halmgut eine nahezu rechtwinklige Umlenkung, die von Gegenständen mit einem zum Halmgut abweichenden, d. h. höheren spezifischen Gewicht aufgrund der Massenträgheit nicht vollzogen wird. Diese Gegenstände gelangen auf die Bürstenwalze 8 und werden von dieser auf die zur Spannrolle 12 gerichteten Seite der Bürstenwalze 8 weitergefördert und dort abgeschleudert und beispielsweise in einem nicht dargestellten Sammelbehälter aufgenommen. Aufgrund der elastischen Bürsten 9 wird eine Beschädigung der Zentralwalze 5 durch Steine oder andere Gegenstände beim Passieren der Berührungszone zwischen der Zentralwalze 5 und der Bürstenwalze 8 vermieden. Außerdem erfüllt die Bürstenwalze 8 die Aufgabe, den Außenumfang der Zentralwalze 5 von mitgeführtem aufbereitetem Halmgut zu reinigen. Die Lagerung 23 der Bürstenwalze 8 ist einstellbar um bei einem Verschleiß, Abnutzung der Bürsten 9 die Wirksamkeit der Bürstenwalze zu gewährleisten. Das Aggregat 3 ist umgeben von dem Rahmen 15, der im wesentlichen gebildet wird durch die Seitenwände 16, 17 in denen die Walzen geführt und gelagert sind sowie die Seitenwände 16, 17 verbindende Tragelemente, die in den Figuren 1 und 2 nicht dargestellt sind. Zur Erreichung eines möglichst schwingungsfreien Einbaus des Aggregat 3 ist eine elastische Lagerung 20 vorgesehen.

### Wirkungsweise der Vorrichtung:

Das dem Aggregat 3 zugeführte Halmgut gelangt in das Abstandsmaß X, das gebildet wird durch die zur Zentralwalze 5 beabstandet angeordnete Planetenwalze 6. Eine Förderung des Halmguts tritt ein aufgrund der gegenläufigen Drehrichtung zwischen der Zentralwalze 5 und aller Planetenwalzen 6, 7. Das sich zwischen den Planetenwalzen 6, 7 und der Zentralwalze 5 sich vom Eintritt 10 zum Austritt 11 hin stetig verkleinernde Abstandsmaß X bewirkt eine über den Umfang der Zentralwalze 5 in Förderrichtung gesehene stetige Verdichtung des Halmgutes und ist weitgehend angepaßt an den durch die Verdichtung des Halmguts verändernde, d. h. reduzierten Querschnitt. Das Zerfasern einzelner Halme des zur Aufbereitung vorgesehenen Halmgutes wird verstärkt durch einen Antrieb der Walzen, der voneinander abweichende Umfangsgeschwindigkeiten zwischen der Zentralwalze 5 und den Planetenwalzen 6, 7 vorsieht. Durch eine im Umfang größer ausgelegte am Eintritt 10 befindliche Planetenwalze 6 wird die Einleitung des Halmgutes verbessert. Hierzu kann es vorteilhaft sein, die Umfangsgeschwindigkeit der Planetenwalze 6 höher als die der Planetenwalzen 7 auszulegen. Das im wesentlichen rechtwinklig auf die Zentralwalze 5 geförderte gemähte Halmgut wird mit Hilfe der Bürstenwalze 8 in den Eintrittsbereich der Vorrichtung umgelenkt. Das aufbereitete Gut verläßt die Vorrichtung über den Austritt 11 und wird weiteren in der Grasmattenmaschine nachgeschalteten Organen zugeführt. Der Aufbereitungsgrad kann weiter verbessert werden, indem der Außenumfang der Zentralwalze 5 und der Planetenwalzen 6, 7 mit Rändelungen versehen wird, deren Querschnittsfläche einem Dreieck gleicht. Diese achsparallel oder schraubenlinienförmig auf dem Außenumfang der Walzen aufgebrachten Rändelungen verbessern die Förderwirkung, und den Grad der Aufbereitung. Außerdem besitzt die Riffelung einen gewissen Selbstreinigungseffekt der Walzen.

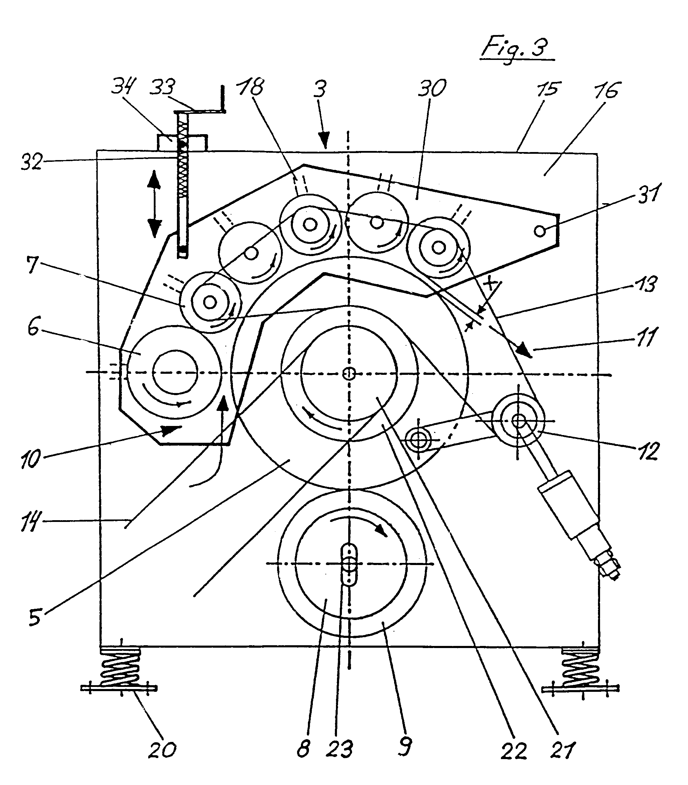

Die Figur 3 zeigt eine Verstelleinheit, mit der zentral alle Planetenwalzen 6, 7 verstellbar sind, d.h. das Abstandsmaß X veränderlich ist. Dazu ist auf beiden Endseiten des Aggregates 3 je ein Segment 30 vorgesehen, das mit der Lagerung der planetenwalzen 6, 7 in Verbindung steht und um einen Drehpunkt 31 schwenkbar ist. Zur genauen Einstellung des Abstandsmaßes X dient eine Gewindespindel 32, die zum einen am vom Drehpunkt 31 entgegengesetzten Ende des Segmentes 30 befestigt ist und zum anderen in der Spindelmutter 34 am Rahmen 15 eingeschraubt ist. Zum Verdrehen der Gewindespindel 32 dient die Kurbel 33 am freien Ende der Gewindespindel 32, d.h. an dem Ende, welches aus der Spindelmutter 34 ragt.

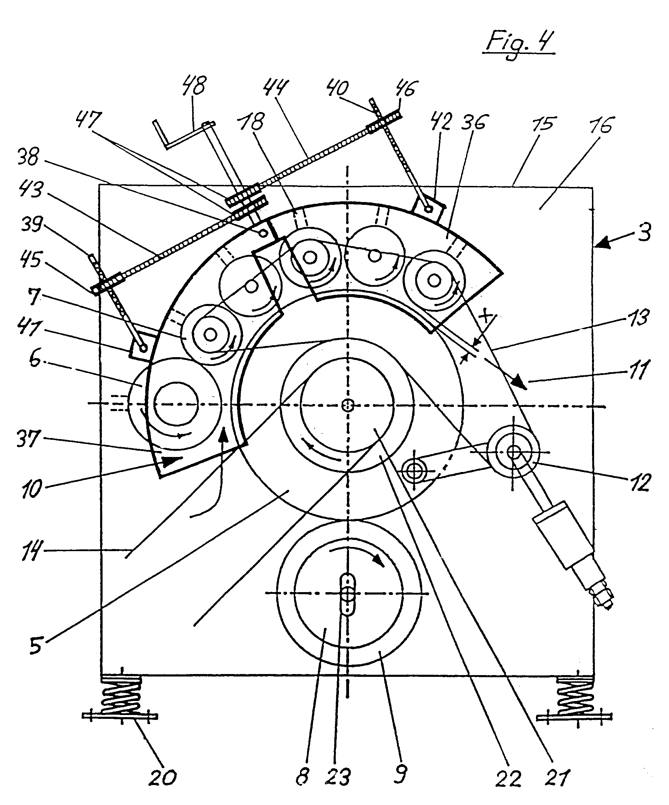

Eine Alternative zu der in Fig.3 gezeigten Verstellung der Planetenwalzen 6,7 ist in Fig.4 dargestellt. Durch eine Teilung des Segments in die Segmente 36,37, die jeweils drei Planetenwalzen aufnehmen, ist eine noch effektivere Einstellung des Abstandsmaßes X möglich. Um einen Drehpunkt 38, der in einem Überlappungsbereich der beiden Segmente 36,37 angeordnet ist, sind diese schwenkbar. Zum Verschwenken der Segmente 36,37 dienen Gewindespindeln 39,40, welche jeweils drehbar in einer an den Segmenten 36,37 befestigten Lasche angelenkt sind. Eine Lageveränderung der Gewindespindel 39,40 erfolgt mittels einer zentral angeordneten Kurbel 48, deren Drehbewegung über Kettenräder 47 und den Ketten 43,44, auf die mit den Gewindespindeln 39,40 in Verbindung stehenden Kettenräder 45,46 übertragen, wobei diese zu den Gewindespindeln 39,40 drehbar aber ortsfest gelagert sind. Zur Darstellung einer voneinander abweichenden Stellbewegung der Segmente 36,37 kann die Gewindesteigung der Gewindespindeln 39,40 voneinander abweichend ausgelegt sein, um damit beispielsweise das Abstandsmaß X im Eintritt 10 des Aggregats 3 schneller verstellen zu können als im Bereich des Austritts 11. Alternativ zu der in Fig.4 dargestellten Lösung bietet es sich weiter an, das Segment in noch mehr Abschnitte aufzuteilen.

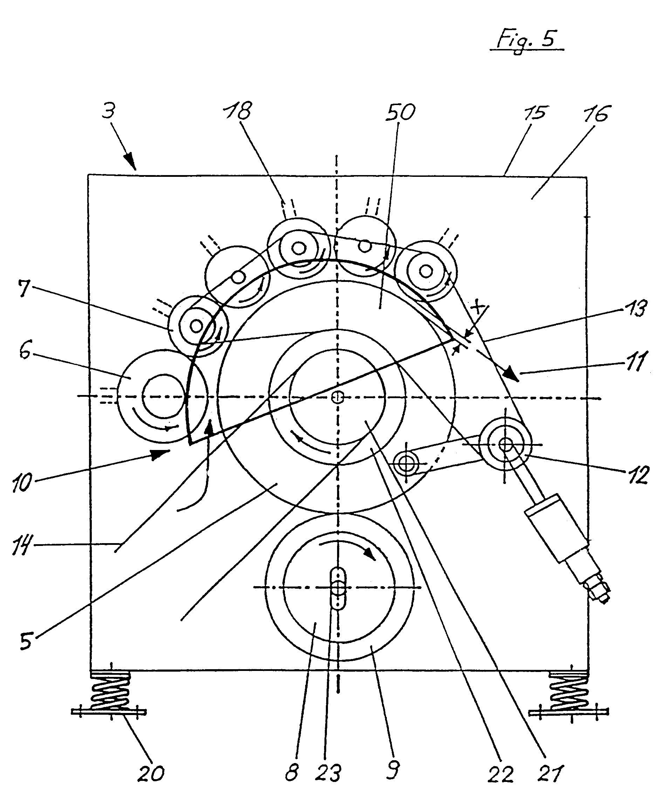

Die Zentralverstellung der Planetenwalzen 6,7 erfolgt gemaß Fig.5 durch eine Kurvenscheibe 50. Die Kurvenscheibe 50 dient dabei als Anschlag für die Planetenwalzen 6,7, die vorgespannt durch eine Feder in Richtung der Zentralwalze 5 gedrückt werden. Durch ein Verdrehen der Kurvenscheibe 50, deren Radius im Uhrzeigersinn abnehmend ausgelegt ist, kann das Abstandsmaß X zwischen der Zentralwalze und den Planetenwalzen 6,7 vorteilhaft zentral eingestellt werden.

## Patentansprüche

1. Vorrichtung zur Halmgutaufbereitung, insbesondere eingebaut in Grasmattenmaschinen, der geschnittenes Halmgut über einen Eintritt zugeführt wird und das aufbereitete Halmgut die Vorrichtung über einen Austritt verläßt, wobei der Aufbau der Vorrichtung eine Zentralwalze umfaßt, der mehrere einen Teilumfang bildende, einen zur Zentralwalze abweichenden Durchmesser aufweisende Planetenwalzen beabstandet zugeordnet sind, und alle Walzen über einen gemeinsamen Antrieb verfügen, wobei die Drehrichtung zwischen der Zentral- und den Planetenwalzen gegensinnig ist, wobei die Zentralwalze (5) und die Planetenwalzen (6, 7) eine zueinander abgestimmte Oberflächenstruktur aufweisen, dadurch gekennzeichnet, daß diese Walzen gemeinsam mit einer unterhalb der Zentralwalze (5) vorgesehenen Bürstenwalze (8) endseitig in Seitenwänden (16, 17) gelagert sind und daß die Seitenwände (16, 17) mit einem Rahmen (15) ein Aggregat (3) bilden.

2. Vorrichtung nach Anspruch 1,
dadurch gekennzeichnet, daß der Antrieb des Aggregates auf die Zentralwalze (5) erfolgt und die Planetenwalzen (6, 7) von der Zentralwalze (5) antreibbar sind.

3. Vorrichtung nach Anspruch 2,
dadurch gekennzeichnet, daß der Antrieb für einen Teil der Planetenwalzen (6, 7) von der einen Seite der Zentralwalze (5) und der andere Teil von der Gegenseite der Zentralwalze (5) aus gesplittet erfolgt.

4. Vorrichtung nach Anspruch 3,
dadurch gekennzeichnet, daß der Antrieb für benachbarte Planetenwalzen abwechselnd von der einen Seite der Zentralwalze (5) oder der anderen Seite der Zentralwalze (5) erfolgt.

5. Vorrichtung nach einem der vorhergehenden Ansprüche,
dadurch gekennzeichnet, daß der Durchmesser einer Planetenwalze (6) größer ist als der Durchmesser aller übrigen untereinander gleich dimensionierten Planetenwalzen (7).

6. Vorrichtung nach einem der vorhergehenden Ansprüche,
dadurch gekennzeichnet, daß die Planetenwalze (6) ein im Durchmesser größeres Antriebsrad aufweist zur Darstellung einer gleichen Umfangsgeschwindigkeit für alle Planetenräder (6, 7).

7. Vorrichtung nach einem der vorhergehenden Ansprüche,
dadurch gekennzeichnet, daß die Umfangsgeschwindigkeiten der Planetenwalzen (6, 7) beginnend vom Eintritt (10) zum Austritt (11) stetig größer werdend ausgelegt sind.

8. Vorrichtung nach einem der vorhergehenden Ansprüche,
dadurch gekennzeichnet, daß sich ein Abstandsmaß (X) zwischen der Zentralwalze (5) und den Planetenwalzen (6, 7) zwischen dem Eintritt (10) und dem Austritt (11) kontinuierlich veränderlich einstellen läßt.

9. Vorrichtung nach einem der vorhergehenden Ansprüche,
dadurch gekennzeichnet, daß eine zentrale Verstellung für das Abstandsmaß (X) vorgesehen ist, mit der alle Planetenwalzen (6, 7) gleichzeitig verstellbar sind.

10. Vorrichtung nach den Ansprüchen 8 und 9,
dadurch gekennzeichnet, daß eine abhängig vom Durchsatz des Halmgutes erfolgende Abstandsmaßverstellung vorgesehen ist.

11. Vorrichtung nach einem der vorhergehenden Ansprüche,
dadurch gekennzeichnet, daß eine federnde Lagerung aller Planetenwalzen bei Beibehaltung des Abstandmaßes vorgesehen ist.

12. Vorrichtung nach Anspruch 11,
dadurch gekennzeichnet, daß die Planetenwalzen (6, 7) einen längenveränderlichen Antrieb aufweisen.

13. Vorrichtung nach einem der vorhergehenden Ansprüche,
dadurch gekennzeichnet, daß ein Abstandsmaß (X) zwischen der Zentralwalze (5) und den Planetenwalzen (6,7) im Bereich des Eintritts (10) zwischen 1 und 20 mm und im Bereich des Austritts (11) zwischen 0 und 5,0 mm vorgesehen ist.

14. Vorrichtung nach einem der vorhergehenden Ansprüche,
dadurch gekennzeichnet, daß ein Verhältnis der Umfangsgeschwindigkeiten zwischen der Zentralwalze (5) und den Planetenwalzen (6, 7) im Bereich zwischen 1,1 : 1 und 2 : 1 vorgesehen ist.

15. Vorrichtung nach einem der vorhergehenden Ansprüche,
dadurch gekennzeichnet, daß die Umfangsgeschwindigkeit der Zentralwalze (5) und die der Bürstenwalze (8) 5 bis 35 m/sec. beträgt.

16. Vorrichtung nach einem der vorhergehenden Ansprüche,
dadurch gekennzeichnet, daß die Zentralwalze (5) und alle Planetenwalzen (6, 7) auf dem Außenumfang eine Längsriffelung aufweisen mit einer Teilung, die ein Maß von 0,5 bis 10 mm vorsieht.

17. Vorrichtung nach Anspruch 16,
dadurch gekennzeichnet, daß die Riffelung schraubenlinienförmig aufgebracht ist, wobei für den Drall ein Bereich von 0,1 bis 20% verwendbar ist.

18. Vorrichtung nach Anspruch 15,
dadurch gekennzeichnet, daß für die Riffelung ein Profilwinkel zwischen 35 bis 90° vorgesehen ist.

19. Vorrichtung nach einem der vorhergehenden Ansprüche 16 bis 18,
dadurch gekennzeichnet, daß die Rändelspitzen der Riffelung im Außenbereich abgeflacht ausgebildet sind, wobei für die Abflachung ein Maß zwischen 0,1 bis 5,0 mm ausreichend ist.

20. Vorrichtung nach einem der vorhergehenden Ansprüche,
dadurch gekennzeichnet, daß die Seitenwand (16, 17) jeweils strahlenförmig auf den Mittelpunkt der Zentralwalze (5) gerichtete Aussparungen (18) aufweist zur Aufnahme der Planetenwalze (6, 7).

21. Vorrichtung nach Anspruch 1,
dadurch gekennzeichnet, daß die Bürstenwalze (8) im gleichen Drehsinn wie die Zentralwalze (5) angetrieben ist.

22. Vorrichtung nach Anspruch 21,
dadurch gekennzeichnet, daß die Bürstenwalze (8) mit auf dem Außenumfang angeordneten elastischen Bürsten versehen ist.

23. Vorrichtung nach Anspruch 21,
dadurch gekennzeichnet, daß die Bürstenwalze (8) lageveränderlich angeordnet ist.

24. Vorrichtung nach Anspruch 1,
dadurch gekennzeichnet, daß die Bürstenwalze (8) die Funktion einer Steinsicherung übernimmt.

25. Vorrichtung nach Anspruch 1,
dadurch gekennzeichnet, daß die Bürstenwalze (8) das von einem Elevator geförderte Halmgut in den Eintritt (10) umlenkt.

26. Vorrichtung nach einem der vorhergehenden Ansprüche,
dadurch gekennzeichnet, daß eine elastische Lagerung (20) für das Aggregat (3) vorgesehen ist.

27. Vorrichtung nach einem der vorhergehenden Ansprüche,
dadurch gekennzeichnet, daß das Aggregat (3) als Einheit in eine Grasmattenmaschine einsetzbar ist.

28. Vorrichtung nach einem der vorhergehenden Ansprüche,
dadurch gekennzeichnet, daß die Anzahl von Planetenwalzen (7) variabel zwischen 1 bis 10 auslegbar ist.

29. Vorrichtung nach einem der vorhergehenden Ansprüche,
dadurch gekennzeichnet, daß der Durchmesser der Zentralwalze im Bereich zwischen 200 bis 900 mm und der Durchmesser der Planetenwalzen (7) zwischen 50 bis 400 mm ausgelegt ist.

## Claims

1. A crop-conditioning device, especially incorporated in a grass matting machine, to which cut crop is fed via an inlet and from which the conditioned crop leaves via an outlet, the said device comprising a central roll, to which are assigned a plurality of planetary rolls arranged partially around the central roll at a distance therefrom and of different diameter to the central roll, with all the rolls being driven by a common drive and the direction of rotation of the planetary rolls being counter to that of the central roll, and the central roll (5) and planetary rolls (6, 7) being provided with a matching surface structure, characterised in that these rolls are mounted, together with a brush roll (8) provided underneath the central roll (5), at their ends in side walls (16, 17), and that the side walls (16, 17), together with a frame (15), constitute a unit (3).

2. A device according to claim 1,
characterised in that the unit is driven by the central roll (5) and that the planetary rolls (6, 7) can be driven by the central roll (5).

3. A device according to claim 2,
characterised in that a number of the planetary rolls (6, 7) are driven by one side of the central roll (5) and the remainder of the planetary rolls (6, 7) are driven separately by the opposite side of the central roll (5).

4. A device according to claim 3,
characterised in that adjacent planetary rolls (6, 7) are alternately driven by one side of the central roll (5) or the other side of the central roll (5).

5. A device according to any preceding claim,
characterised in that the diameter of one planetary roll (6) is greater than the diameter of the remainder of the planetary rolls (7) which all have the same dimensions.

6. A device according to any preceding claim,
characterised in that the planetary roll (6) has a drive wheel which is greater in diameter to yield the same circumferential speed for all planetary wheels (6, 7).

7. A device according to any preceding claim,
characterised in that the circumferential speed of the planetary rolls (6, 7) increases continuously from the inlet (10) to the outlet (11).

8. A device according to any preceding claim,
characterised in that the clearance (X) between the central roll (5) and the planetary rolls (6, 7) can be set so that it varies continually between the inlet (10) and the outlet (11).

9. A device according to any preceding claim,
characterised in that the clearance (X) is adjusted centrally so that all planetary rolls (6, 7) can be adjusted at the same time.

10. A device according to claims 8 and 9,
characterised in that the clearance setting is dependent on the throughput of crop.

11. A device according to any preceding claim,
characterised in that all planetary rolls are spring-mounted with retention of the clearance.

12. A device according to claim 11,
characterised in that the planetary rolls (6, 7) are provided with a drive of variable length.

13. A device according to any preceding claim,
characterised in that the clearance (X) between the central roll (5) and the planetary rolls (6, 7) is in the range 1 to 20 mm in the region of the inlet (10) and in the range 0 to 5.0 mm in the region of the outlet (11).

14. A device according to any preceding claim,
characterised in that the ratio of circumferential speed of the central roll (5) to that of the planetary rolls (6, 7) is in the range 1.1 : 1 to 2 : 1.

15. A device according to any preceding claim,
characterised in that the circumferential speed of the central roll (5) and that of the brush roll (8) lies between 5 and 35 m/sec.

16. A device according to any preceding claim,
characterised in that the central roll (5) and all planetary rolls (6, 7) are provided with longitudinal fluting with a spacing of between 0.5 and 10 mm.

17. A device according to claim 16,
characterised in that the fluting is helical and a value in the range 0.1 to 20% can be adopted for the helix.

18. A device according to claim 15,
characterised in that the fluting has a groove angle of between 35 and 90°.

19. A device according to any one of claims 16 to 18,
characterised in that the knurl peaks of the fluting are flattened in the outer region, the amount of flattening being between 0.1 and 5.0 mm.

20. A device according to any preceding claim,
characterised in that the side walls (16, 17) are each provided with recesses (18) aligned radially towards the mid-point of the central roll (5) to accommodate the planetary rolls (6, 7).

21. A device according to claim 1,
characterised in that the brush roll (8) is driven to rotate in the same direction as the central roll (5).

22. A device according to claim 21,
characterised in that the brush roll (8) is provided with elastic or resilient brushes on its outer circumference.

23. A device according to claim 21,
characterised in that the brush roll (8) is arranged so that it can be moved in position.

24. A device according to claim 1,
characterised in that the brush roll (8) serves to protect the device against stones.

25. A device according to claim 1,
characterised in that the brush roll (8) deflects crop material conveyed by an elevator into the inlet (10).

26. A device according to any preceding claim,
characterised in that the unit (3) is provided with a resilient mounting (20).

27. A device according to any preceding claim,
characterised in that the unit (3) can be used in a grass matting machine.

28. A device according to any preceding claim,
characterised in that the number of planetary rolls (7) can be varied between 1 and 10.

29. A device according to any preceding claim,
characterised in that the diameter of the central roll is in the range 200 to 900 mm and the diameter of the planetary rolls (7) is in the range 50 to 400 mm.

## Revendications

1. Dispositif pour préparer du fourrage notamment dispositif intégré à des machines produisant des nappes d'herbe, recevant la récolte coupée par une entrée et la récolte préparée quittant le dispositif par une sortie, la construction du dispositif comprenant un cylindre central auquel sont associés plusieurs cylindres planétaires de diamètres différents de celui du cylindre central et qui forment une enveloppe périphérique partielle, et tous les cylindres ont un entraînement commun, le sens de rotation du cylindre central et du cylindre planétaire étant opposé, le cylindre central (5) et les cylindres planétaires (6, 7) ont une structure de surface correspondante, dispositif caractérisé en ce que ces cylindres sont montés en commun par les extrémités dans des parois latérales (16, 17), avec le cylindre porte-brosses (8) prévu sous le cylindre central (5) et en ce que les parois latérales (16, 17) forment un ensemble (3) avec un cadre (15).

2. Dispositif selon la revendication 1, caractérisé en ce que l'entraînement de l'ensemble se fait par le cylindre central (5) qui entraîne les cylindres planétaires (6, 7).

3. Dispositif selon la revendication 2, caractérisé en ce que l'entraînement d'une partie des cylindres planétaires (6, 7) se fait par un côté du cylindre central (5) et l'autre partie des cylindres planétaires se fait de manière divisée à partir de l'autre côté du cylindre central (5).

4. Dispositif selon la revendication 3, caractérisé en ce que l'entraînement des cylindres planétaires adjacents se fait en alternance d'un côté ou de l'autre du cylindre central (5).

5. Dispositif selon l'une des revendications précédentes, caractérisé en ce que le diamètre d'un cylindre planétaire (5) est supérieur au diamètre de tous les autres cylindres planétaires (7) de mêmes dimensions.

6. Dispositif selon l'une des revendications précédentes, caractérisé en ce que le cylindre planétaire (6) comporte une roue d'entraînement de diamètre plus grand que celui des autres roues d'entraînement pour avoir la même vitesse périphérique pour tous les cylindres planétaires (6, 7).

7. Dispositif selon l'une des revendications précédentes, caractérisé en ce que la vitesse périphérique des cylindres planétaires (6, 7) augmente en continu à partir de l'entrée (10) jusqu'à la sortie (11).

8. Dispositif selon l'une des revendications précédentes, caractérisé en ce qu'il permet un réglage variable en continu de l'écartement (X) entre le cylindre central (5) et les cylindres planétaires (6, 7), entre l'entrée (10) et la sortie (11).

9. Dispositif selon l'une des revendications précédentes, caractérisé par un réglage central pour l'écartement (X), qui permet de régler simultanément tous les cylindres planétaires (6, 7).

10. Dispositif selon les revendications 8 et 9, caractérisé par un réglage d'écartement qui se fait en fonction du débit de la récolte.

11. Dispositif selon l'une des revendications précédentes, caractérisé par un montage élastique de tous les cylindres planétaires conservant l'écartement.

12. Dispositif selon la revendication 11, caractérisé en ce que les cylindres planétaires (6, 7) ont un moyen d'entraînement de longueur variable.

13. Dispositif selon l'une des revendications précédentes, caractérisé par un écartement (X) entre le cylindre central (5) et les cylindres planétaires (6, 7) qui dans la zone de l'entrée (10) est compris entre 1 et 20 mm et dans la zone de sortie (11) est compris entre 0 et 5 mm.

14. Dispositif selon l'une des revendications précédentes, caractérisé en ce qu'un rapport des vitesses périphériques du cylindre central (5) et des cylindres planétaires (6, 7) est situé dans une plage comprise entre 1,1 : 1 et 2 : 1.

15. Dispositif selon l'une des revendications précédentes, caractérisé en ce que la vitesse périphérique du cylindre central (5) et celle du cylindre porte-brosses (8) est comprise entre 5 et 35 m/sec.

16. Dispositif selon l'une des revendications précédentes, caractérisé en ce que le cylindre central (5) et tous les cylindres planétaires (6, 7) comportent, à leur surface périphérique, les nervures longitudinales dont le pas correspond à une mesure comprise entre 0,5 et 10 mm.

17. Dispositif selon la revendication 16, caractérisé en ce que les nervures ont un tracé hélicoïdal et le pas est variable entre 0,1 et 20 %.

18. Dispositif selon la revendication 15, caractérisé en ce que les nervures ont un angle de profil compris entre 35 et 90°.

19. Dispositif selon l'une des revendications précédentes 16 à 18, caractérisé en ce que les pointes des nervures sont aplaties dans la zone extérieure et la partie aplatie correspond à une dimension comprise entre 0,1 et 5 mm.

20. Dispositif selon l'une des revendications précédentes, caractérisé en ce que la paroi latérale (16, 17) comporte des découpes (18) rayonnantes par rapport au centre du cylindre central (5) pour recevoir les cylindres planétaires (6, 7).

21. Dispositif selon la revendication 1, caractérisé en ce que le cylindre porte-brosses (8) est entraîné dans le même sens de rotation que le cylindre central (5).

22. Dispositif selon la revendication 21, caractérisé en ce que le cylindre porte-brosses (8) comporte des balais élastiques prévus à sa périphérie.

23. Dispositif selon la revendication 21, caractérisé en ce que le cylindre porte-brosses (8) est monté variable en position.

24. Dispositif selon la revendication 1, caractérisé en ce que le cylindre porte-brosses (8) assure la fonction d'une protection contre les pierres.

25. Dispositif selon la revendication 1, caractérisé en ce que le cylindre porte-brosses (8) dévie la récolte transférée par un élévateur à l'entrée (10).

26. Dispositif selon l'une des revendications précédentes, caractérisé par un montage élastique (20) de l'ensemble (3).

27. Dispositif selon l'une des revendications précédentes, caractérisé en ce que l'ensemble (3) est applicable globalement à une machine à produire des nappes d'herbe.

28. Dispositif selon l'une des revendications précédentes, caractérisé en ce que le nombre des cylindres planétaires (7) est variable et est compris entre 1 et 10.

29. Dispositif selon l'une des revendications précédentes, caractérisé en ce que le diamètre du cylindre central correspond à une plage comprise entre 200 et 900 mm et le diamètre des cylindres planétaires (7) est compris entre 50 et 400 mm.
